# EUROPEAN PATENT SPECIFICATION

(11) **EP 2 821 887 B1**
(45) Date of publication and mention of the grant of the patent: **19.06.2019**
(21) Application number: 13174560.6
(22) Date of filing: 01.07.2013
(51) Int. Cl.: G06F 3/01, G06F 3/03

(54) **Display navigation using touch-less gestures**
Anzeigenavigation mit berührungslosen Gesten
Navigation d'affichage utilisant des gestes sans contact

(43) Date of publication of application: 07.01.2015
(73) Proprietor: BlackBerry Limited, Waterloo, ON N2K 0A7 (CA)
(72) Inventor: Mankowski, Peter, Waterloo, ON N2L 3W8 (CA); Rang, Weimin, Waterloo, ON N2L 3W8 (CA); Wu, Xiaowei, Waterloo, ON N2L 3W8 (CA)
(74) Representative: Fennell, Gareth Charles

(56) References cited:
- EP-A1- 0 538 705
- US-A1- 2011 248 151
- US-A1- 2011 310 005
- US-A1- 2012 280 904

## Description

### BACKGROUND

Computing and communication devices such as laptops, tablets, smart phones, and the like typically facilitate navigation and manipulation of the device display through keyboard or touch-screen entries. These entries may facilitate navigating among multiple display pages (images) and adjusting a zoom scale for example.

US 2011/031005 A1 discloses a contact-less gesture recognition system that utilises infrared (IR) light emitters and IR proximity sensors for detection and recognition of three-dimensional hand gestures. Sensor data of the IR proximity sensors is divided into frames of a sufficient duration and passed to a gesture classifier to determine whether a gesture signature is present in a respective frame. The gesture classifier initially determines for each frame whether the variance of the proximity sensor data is less than a threshold. If the variance is less than the threshold, no gesture is detected and the frame is discarded. Otherwise, various operations are performed to determine whether the frame data corresponds to a known gesture signature.

US 2012/0280904 A1 discloses a touch-less gesture sensing device including a multiple segmented photo sensor and a control circuit for processing sensed voltages output from the sensor. The control circuit processes the sensed voltage signals of the photo sensor segments to calculate a differential signal and to determine, based on the calculated differential signal, a vector of object motion relative to the segmented photo sensor. In one embodiment, the gesture sensing device and algorithm is adapted for use with an illumination source included in the gesture sensing device. In an alternative embodiment, instead of detecting reflected light originating from the illumination source included in the gesture sensing device, a touch-less gesture is detected based on ambient light shadowed by an object with which the gesture is performed.

EP 0538705 A1 relates to touch gesture recognition in a multi-application environment and suggests the usage of application specific gesture libraries and a system gesture library that are respectively accessed based on the graphical interface in which a touch gesture is performed.

US 2011/248151 A1 relates to a sensor system that includes a plurality of photo detectors, which generate signals proportional to incident light, the sensor system being suitable for use in a touch-less gesture recognition system. The sensor system further includes an optical barrier adjacent to a surface and includes a control circuit. The optical barrier partially obstructs reflected light from reaching the plurality of photo detectors to produce a spatially dependent reflectance pattern that is dependent on a position of an object relative to a substrate. In an active mode of operation, motion of the object above the sensor system is detected based on reflected light originating from an illumination source included in the sensor system. In a passive mode of operation, the object motion is detected based on ambient light shadowed by the object. In the context of the active mode of operation, it is suggested that a controller of the sensor system continuously determines changes in reflectance ratios measured for pairs of adjacent photo detectors at successive time slots, and determines motion of the object based on the changes in the reflectance ratios that exceed a threshold value. Data related to the motion is then communicated to a host system which can use the data to determine a user input based on the detected motion. If the ratio difference is smaller than the threshold value, the movement of the object is insufficient for the controller to interpret the motion as a user input.

### SUMMARY OF THE INVENTION

The present invention is set out in the independent claims, with some optional features set out in the claims dependent thereto.

The embodiments and/or examples of the following detailed description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 shows a device including an exemplary arrangement of ambient light sensors;
Figure 2 depicts another view of the device shown in Figure 1;
Figure 3 shows a device including an exemplary arrangement of ambient light sensors according to another embodiment;
Figure 4 shows a device including an exemplary arrangement of ambient light sensors according to yet another embodiment;
Figure 5 is a block diagram of a system to process gestures;
Figure 6 is a block diagram of a system to control the two or more ambient light sensors;
Figure 7 shows the process flow of a method of detecting a gesture;
Figure 8 is a block diagram of an exemplary device that facilitates touch-less gesture detection as described herein;
Figure 9 illustrates exemplary gestures associated with display navigation;
Figure 10 shows an exemplary device that may facilitate navigation based on touch-less gestures; and
Figure 11 is a process flow of an exemplary method of navigating the display of a device based on touch-less gestures.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

As noted above, display navigation is typically achieved in smartphones, tablets, computers and other computing and communication devices through keyboard or touch-screen operation. Mouse, touchpad, and other inputs are also typical. However, these input tools that require contact with the computing and communication device and often also require finding a specific selection on the device are sometimes difficult or inconvenient to use. For example, in some work environments (e.g., oil rig, operating room), a user's hands may not be clean enough to operate a touch-screen, touchpad, or keyboard. In other environments, such as an operating room or in low temperature locations, an authorized user may not want to remove gloves in order to operate a touch-screen or small keyboard. There may be circumstances when finding the correct keyboard or screen selection is impractical. For example, a speaker presenting slides in a dark room may have difficulty repeatedly finding the correct key or screen input to advance the slides. A system and method to recognize gestures is described herein. In addition, embodiments describe a system and method to facilitate display navigation using touch-less gestures.

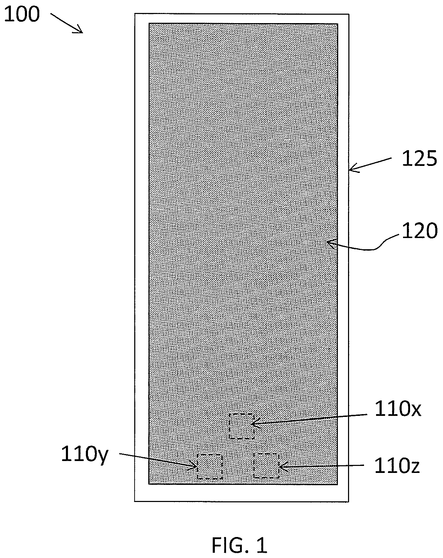

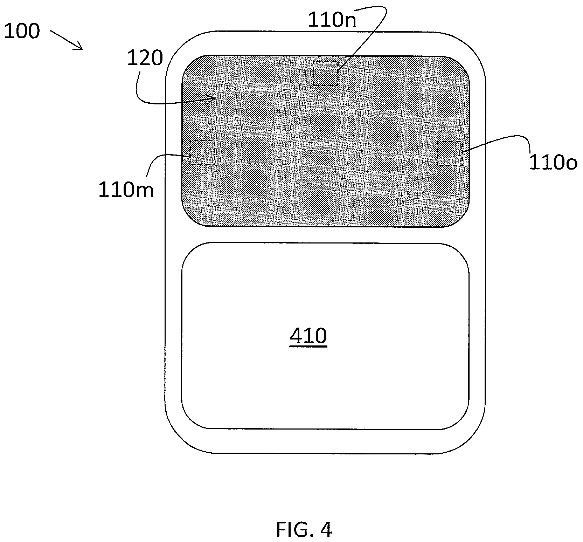

Figure 1 shows a device 100 including an exemplary arrangement of ambient light sensors 110. The device 100 may be any computation, communication, or data storage device such as a tablet, laptop computer, smart phone, music player, storage device, and the like. The view depicted by Figure 1 shows the screen 120 (e.g., glass or other transparent surface) of the device 100 on a surface of the body 125 that displays information to a user, which can be based on user selections or generated by the device 100. Information generated by the device can include the status of communication connections (mobile network, wifi connection(s), Bluetooth connections, etc.), telephone call, or electronic messages or any combination thereof. The screen 120 can act as the input/output (I/O) between the device 100 and the user. The exemplary device 100 shown in Figure 1 has a screen 120 that occupies most of one surface of the device 100. Other exemplary devices 100 may instead include a keyboard or other components such that the relative size of the screen 120 to the size of a surface of the device 100 is smaller than shown in Figure 1 (see e.g., Figure 4). Three ambient light sensors (ALSs) 110x, 110y, 110z are disposed beneath the screen 120 in Figure 1. Although the ALSs 110 are shown disposed beneath the screen 120 to protect from environmental and accidental damage, the ALSs 110 receive the same intensity of ambient light or at least sufficient ambient light to detect a change in ambient light whether they are disposed above or below the screen 120, because the screen 120 is a transparent device element that allows ambient light to pass through. The screen 120 includes a glass or polymer exterior layer that may filter or diffuse some light, e.g., certain ranges of light wavelengths. Sufficient light for detection as described herein passes through the exterior layer of the screen 120. The ambient light refers to the available light (brightness and direction of light) in the environment in which the device 100 is being used. As such, the ALSs 110 are passive devices. In an example, the ALSs 110 do not have and are not associated with emitters on the device 100 to provide the light that is detected by the ALSs 110. In a further example, the device 100 does not emit light for the purpose of gesture detection. Ambient light is, in an example, the light present in the environment in which the device is present.

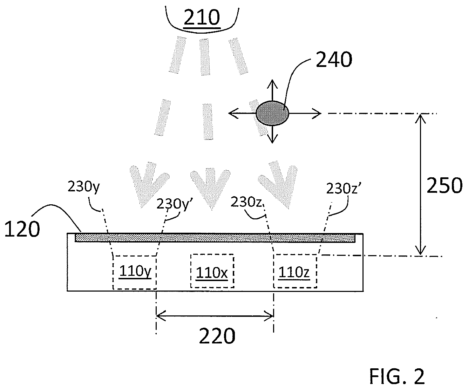

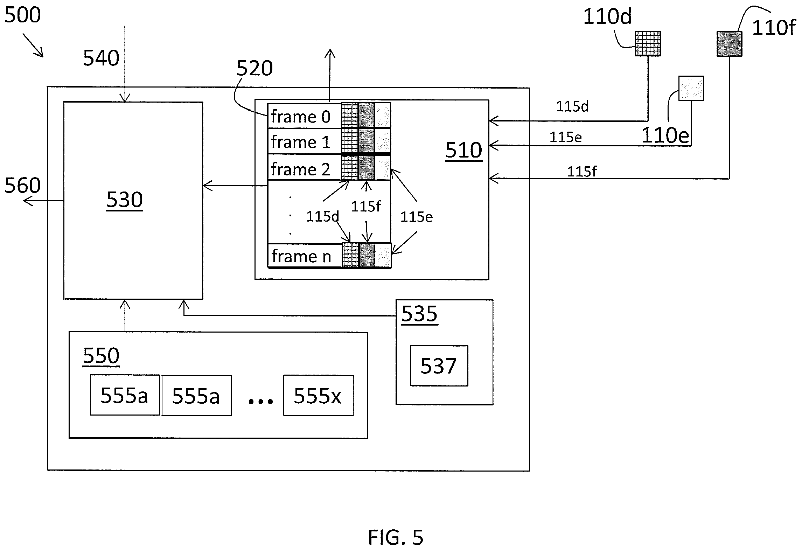

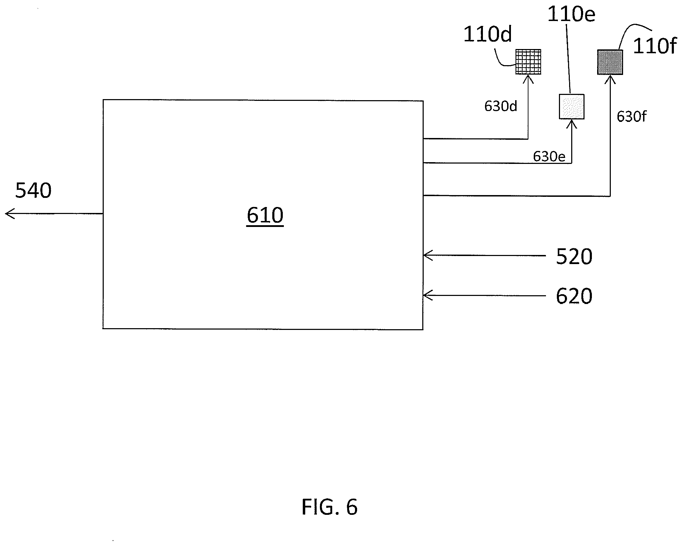

Figure 2 depicts another view of the device 100 shown in Figure 1. The view shown by Figure 2 includes a light source 210. This light source 210 may be the sun, a lamp, or some combination of light sources that provide the available light in a given environment in which the device 100 is being used. If the device 100 is outside during the day, the sun provides the ambient light, which is spread spectrum light. If the device is being used indoors with no exterior windows, the ambient light is generated by indoor lighting systems, e.g. lamps, fluorescent bulbs, incandescent bulbs, LEDs, etc. The ambient light can also be a combination of natural light (e.g., sunlight) and artificial light (e.g., fluorescent light, incandescent light). Each ALS 110 outputs a current level corresponding with the measured light intensity 115 (see e.g., Figure 5). An analog-to-digital converter may be used to derive a digital output from the ALSs 110. Each of the ALSs 110 may have adjustable sensitivity (adjustable gain setting). Each ALS 110 may also be a spread spectrum sensor with a selectable range of operation among two or more ranges (wavelength bands or ranges). The process entailed in this selection is discussed further below with reference to Figure 6. The full range of operation of each ALS 110 may be close to the wavelength range of visible light (400nm to 700 nm). A typical commercially available ALS may detect ambient light in the wavelength range of 350nm to 700 nm, for example. Because each ALS 110 measures the intensity of the available (ambient) light within its zone of reception (see e.g. 230y and 230y' defining a zone of reception for ALS 110y and 230z and 230z' defining a zone of reception for ALS 110z), the ALS 110 is a passive sensor that does not require a corresponding emitter or transmitter. The zone of reception is typically cone-shaped with the cone dimensions being determined by an angle of half sensitivity. Figure 2 is a cross-sectional view of an exemplary zone of reception. Each ALS 110 may measure light intensity 115 within its zone of reception in a photometric unit (lux) to provide a measure of lumens per square-meters or in a radiometric unit (irradiance) to provide a measure of watts per square-meters. In the embodiment shown by Figures 1 and 2, the three ALSs 110x, 110y, 110z are arranged in a triangular pattern. That is, at least one ALS 110 is offset or not linearly aligned with at least two other ALSs 110.

Through the inclusion of two or more ALSs 110 (three ALSs 110x, 110y, 110z), the device 100 shown in Figures 1 and 2 facilitates detection of a gesture by an object 240 that changes the light intensity 115 (see e.g., Figure 5) in the zone of detection of one or more of the ALSs 110 due to movement of the object 240. Through the inclusion of three or more ALSs 110 with at least three of the three or more ALSs 110 in a triangular pattern (see e.g., Figure 1), movement of an object 240 may be discerned in three dimensions. As is further detailed below, a gesture is detected and identified based on the changes in light intensity 115 measured by each of the ALSs 110 at different time instants or measurement cycles due to the movement of the object 240. That is, each of the ALSs 110 measures light intensity 115 simultaneously with the other ALSs 110 in sequence, or in one example, at a given time instance, with the other ALSs 110 for a measurement cycle, and the comparison of light intensity 115 measurements for different time instants or measurement cycles is used to detect a gesture. For example, assuming that the ALSs 110 measure light intensity 115 simultaneously (or near-simultaneously), at the time instant illustrated by Figure 2, the object 240 is positioned such that the light intensity 115 detected by ALS 110z is affected but the light intensity 115 detected by ALSs 110x and 110y is unaffected by the object 240. Based on a direction of movement of the object 240, the light intensity 115 detected by different ones of the ALSs 110x, 110y, 110z may be affected at different times instants by the position of the object 240. The object 240 may be a hand, one or more fingers, a wand or another non-transparent item that partially or completely blocks the passage of ambient light so that its position may be detected based on the effect on measured light intensity 115.

A touch-free gesture may mimic a swipe, also known as a flick, which can be a particular type of touch on a touch-sensitive display. The swipe or flick may begin at an origin point and continue to an end point, for example, a concluding end of the gesture. A gesture may be identified by attributes or characteristics of the gesture as discussed further below. These attributes may include the origin point (of detection by an ALS 110), the end point, the distance travelled by the object 240, the duration, the velocity, and the direction, for example. A gesture may be long or short in distance and/or duration. Two points of the gesture may be utilized to determine a direction of the gesture. A gesture may also include a hover. A hover may be non-movement of the object 240 at a location that is generally unchanged over a period of time.

In the arrangement of ALSs 110 shown in Figures 1 and 2, a minimum distance may be required among the ALSs 110x, 110y, and 110z (e.g., distance 220 between ALSs 110y and 110z) in order to distinguish the movement of the object 240. This minimum distance may generally be on the order of 2 centimeters (cm). More specifically, the minimum distance between ALSs 110 is based on an expected size of the object 240 as one factor. For example, when an open hand is used as the object 240, a greater minimum distance may be required to distinguish a gesture than when one finger is used as the object 240. This is because the open hand would cover all three ALSs 110x, 110y, 110z at more time instants such that a movement of the open hand could only be distinguished when the object 240 is at an edge of the set of ALSs 110x, 110y, 110z. According to one or more embodiments, the ALSs 110 may be positioned at the corners or along the edges of the screen 120 and, thus, the screen 120 size may determine the distance between the ALSs 110. When an open hand is anticipated to be the object 240 used to perform a gesture, a minimum distance between ALSs 110 of 3.5 cm may be used. The increased distance between ALSs 110 facilitates distinguishing the gesture (e.g., direction, speed) more clearly, because all ALSs 110 will not be covered by the open hand object 240 for the majority of the gesture movement.

Another distance that must be considered is the distance between the object 240 and the ALS 110 (e.g., distance 250 between the object 240 and ALS 110z). First, as Figure 2 makes clear, the object 240 must be between the light source 210 and the ALSs 110 in order to be detected by one or more of the ALSs 110 based on the effect of the object 240 on light intensity 115 detected by one or more of the ALSs 110. While a minimum distance is generally not required between the object 240 and an ALS 110 (i.e. the object 240 may almost touch the screen 120 surface), the object 240 may generally be 2 - 3 cm away from the screen 120 while performing the gesture. When the object 240 is too close to the ALSs 110 (screen 120 surface), then some portion of the beginning or end of a gesture may not be detected. This is due to the fact that the width of the zone of reception of the ALSs 110 (as shown in the cross-sectional depiction of Figure 2 by 230y and 230y' and by 230z and 230z', for example) is narrowest at the surface of the ALSs 110 and increases with increased distance from the ALSs. Thus, as is clear from Figure 2, an object 240 that is closer in distance to an ALS 110 (screen 120 surface) must also be closer to a center of the ALS 110 (in the perpendicular dimension, along the screen 120) in order to enter the zone of reception of the ALS 110. By hovering the object 240 above a given ALS 110 and moving it farther away (reducing the object 240 effect and increasing light intensity 115 measurement) or closer together (increasing the object 240 effect and decreasing light intensity 115 measurement), a gesture analogous to a mouse click may be made. Thus, double-click and triple-click gestures may be added to available distinguishable gestures.

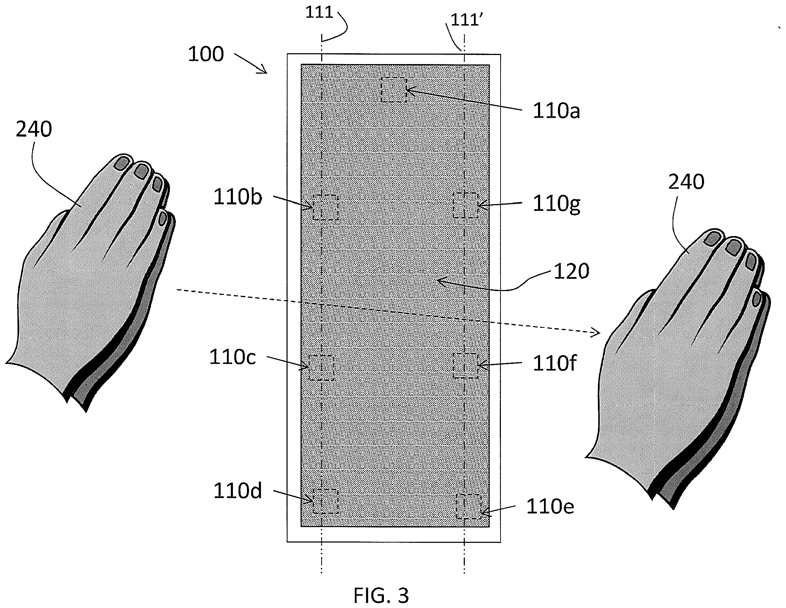

Figure 3 shows a device 100 including an exemplary arrangement of ambient light sensors 110 according to another embodiment. The exemplary device 100 shown in Figure 3 is similar to the device 100 shown in Figures 1 and 2 in that the screen 120 occupies most of one surface of the device 100. The device 100 shown in Figure 3 includes seven ALSs 110a, 110b, 110c, 110d, 110e, 110f, 110g arranged around the perimeter of the screen 120. As shown in Figure 3, ALS 110a is offset from a common axial line 111 of ALSs 110b, 110c, and 110d and also a common axial line 111' of ALSs 110e, 110f, and 110g. In alternate embodiments, one or more of the ALSs 110b, 110c, and 110d or the ALSs 110e, 110f, and 110g may be disposed such that they are not linearly aligned with other ALSs 110 along 111 or 111', respectively. For example, both ALS 110c and ALS 110f may be disposed closer to the center of the screen 120 and, thus, offset from the axial line 111 common to ALSs 110b and 110d and the axial line 111' common to ALSs 110e and 110g, respectively. Increasing the number of ALSs 110 increases the number of gestures that may be detected by the device 100. For example, one waving gesture (movement of the object 240 from one side of the device 100 to the other) is illustrated by Figure 3. Because of the number of ALSs 110 around the perimeter of the screen 120, other waving gestures, distinguishable from the waving gesture shown in Figure 3, are also possible. The object 240 may move from ALSs 110d and 110e to ALS 110a, for example, or from ALS 110d to ALS 110g. It bears noting that, if the ALSs 110 were clustered closer together and the object 240 is a hand, as shown in Figure 3, fewer distinguishable gestures are possible than when the ALSs 110 are disposed, as shown.

Figure 4 shows a device 100 including an exemplary arrangement of ambient light sensors 110 according to yet another embodiment. Unlike the exemplary devices 100 shown in Figures 1-3, the device 100 shown in Figure 4 includes a keyboard or other component in the space 410 such that the screen 120 occupies less of one surface of the device 100 relative to the screen 120 shown in Figures 1-3. Three ALSs 110m, 110n, 110o are shown near the perimeter of the screen 120. As noted above and shown in Figure 1, the ALSs 110m, 110n, 110o may be disposed closer together so that the gestures made by the object 240 are more analogous to gestures a user of a touchpad may make with a finger.

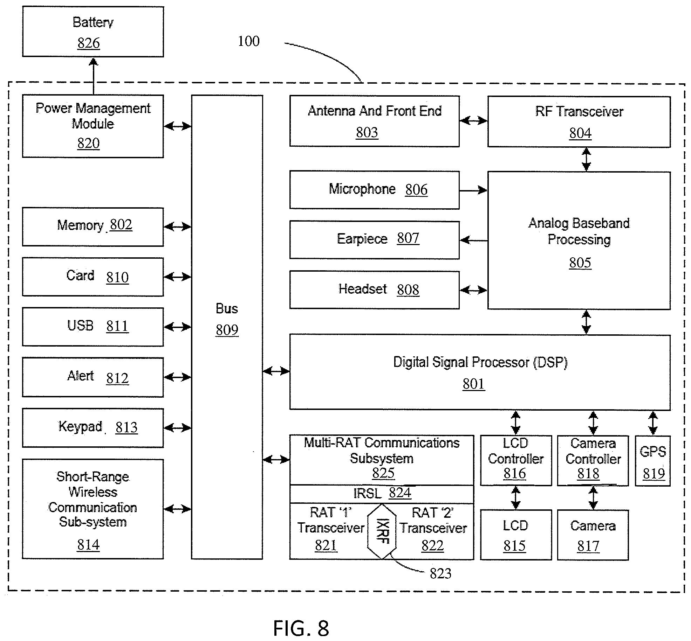

Figure 5 is a block diagram of a system 500 to process gestures. Functions performed by the system 500 are discussed below with reference to specific components. However, in alternate embodiments, the system 500 may process gestures using one or more processors and one or more memory devices that serve more than one of the functions discussed herein. In addition, the same processors and memory devices that process gestures as discussed below may perform other functions within the device 100. For example, the processor to identify gestures may be one of several digital signal processors (DSPs 801, Figure 8) generally available in a smart phone or tablet.

An input to the system 500 is the light intensity 115 measured from each of the ALSs 110. The measurements are received by a data collection engine 510, which includes both memory and processor functionalities. As the light intensity 115 measurement data is received from each of the ALSs 110, the data collection engine 510 outputs a frame of data 520 for each time instant. That is, each frame of data 520 includes the light intensity 115 measurement for every ALS 110 at a given time instant. While each frame of data 520 may generally be discussed as including the light intensity 115 measurement for each ALS 110 at an instant of time, the ALSs 110 may instead sample light intensity 115 in turn (rather than simultaneously) such that a frame of data 520 includes light intensity 115 measurements for a period of time for one cycle of the ALSs 110. A processor functioning as a gesture identifier 530 receives each frame of data 520. The gesture identifier 530 may operate according to one of several embodiments as discussed below.

In order to identify a movement of the object 240 as a particular (known) gesture, the gesture identifier 530 uses a comparison of light intensity 115 measurements of the ALSs 110, as discussed below, along with a comparison with a gesture template 537 stored in a template memory device 535. A dynamically adjusted minimum change in light intensity 115 may be set based on expected noise and errors. That is, a threshold percentage of change in detected light intensity 115 may be required before it is interpreted as a true variation in ambient light. Based on the light intensity 115 measurements among the ALSs 110 within a frame of data 520 (for a single time instant or measurement cycle), the gesture identifier 530 may ascertain a position of the object 240. For example, for a given frame of data 520, if the light intensity 115 measurements of ALSs 110d and 110f are higher (by a defined threshold) than the light intensity 115 measurement output by ALS 110e, then the object 240 may be determined to be over the ALS 110e and, thereby, blocking some of the light from the light source 210. Based on the light intensity 115 measurements among two or more frames of data 520 (two or more time instants or measurement cycles), the gesture identifier 530 may ascertain characteristics of the (movement) gesture such as a direction of the movement, speed of the movement, and whether the movement is accelerating or decelerating. For example, if the light intensity 115 measurements of ALSs 110d and 110f are higher (by a defined threshold) than the light intensity 115 measurement output by ALS 110e in one frame of data 520 and the light intensity 115 measurement of ALS 110e is higher (by a defined threshold) than the light intensity 115 measurements output by ALSs 110d and 110f in the next frame of data 520, the gesture identifier 530 may ascertain that the object 240 moved from a direction of the ALS 110e toward a direction of the ALSs 110d and 110f. If the change in light intensity 115 measurements occurred over several frames of data 520, then the movement of the object 240 may be ascertained as being relatively slower than if the change occurred over the course of one frame of data 240. Based on the ascertained characteristics of the gesture, the gesture identifier 530 may identify the gesture among a set of known gestures based on the gesture template 537.

The gesture template 537 facilitates the association of a movement of the object 240 discerned by the gesture identifier 530 with a particular known gesture. The gesture template 537 may be regarded as a sample of ideal light intensity 115 measurement data corresponding with each known gesture. More specifically, the gesture template 537 may be regarded as providing the ideal relative light intensity 115 among the ALSs 110 or frames of data 520 or both for a given known gesture. Thus, by comparing the input light intensity 115 measurements (in the frames of data 520) or comparisons of light intensity measurements 115 with the ideal measurements in the gesture template 537, the gesture identifier 530 identifies the object 240 movement as a known gesture. This identification of the gesture may be done by a process of elimination of the known gestures in the gesture template 537. Thus, the gesture identifier 530 may identify the gesture using the gesture template 537, through a process of elimination of available known gestures, before the object 240 movement is complete. In this case, the gesture identifier 530 may continue to process frames of data 520 to verify the detected gesture or, in alternate embodiments, the gesture identifier 530 may stop processing additional frames of data 520 after identifying the gesture and wait for a trigger signal 540 discussed below. Each of the ALSs 110 may be programmable to provide 10, 20, 50, 10, 125, 15, 200 and 250 samples of light intensity 115 (frames of data 520) a second. The ALS 110 scanning rate is a factor in determining the speed at which a gesture may be made in order to be recognized. That is, when the ALSs 110 are sampling at a rate of 10 light intensity 115 samples per second, the fastest identifiable gesture is much slower than the fastest identifiable gesture that may be made when the ALSs 110 are sampling at a rate of 250 light intensity 115 samples per second. The ALSs 115 sampling at a rate of 10 frames of data 520 per second (10 light intensity 115 samples per second each) may translate to an object 240 travelling 10 cm in 1.5 seconds in order to be recognized and processed properly. The system 610 (Figure 6) may dynamically calculate and adjust the scanning rate of the ALSs 110.

Another input to the gesture identifier 530 is one of the gesture libraries 555 stored in a gesture library storage 550. Each gesture library 555 is associated with an application, and the gesture identifier 530 selects the gesture library 555 associated with the application currently being executed by the device 100. A given gesture library 555 associated with a given application may not include every known gesture in the gesture template 537. Thus, based on the application currently being executed by the device 100, the gesture identifier 530 may narrow down the set of known gestures within the gesture template 537 to compare against the frames of data 520 output by the data collection engine 510 in order to identify the gesture. A gesture library 555 indicates an action output 560 corresponding with a set of gestures. Thus, when the gesture identifier 530 identifies a known gesture based on the movement of the object 240 and the gesture template 537, and the gesture identifier 530 finds that known gesture among the set of gestures in a gesture library 555 associated with the application currently being run by the device 100, then the gesture identifier 530 outputs the corresponding action output 560 stemming from the object 240 movement. The action output 560 of the gesture identifier 530 acts as a command to the application being executed. For example, when the application being executed is a document editing session, the gestures identified by the gesture identifier 530 may correspond with action outputs 560 such as "next page" (wave down), "previous page" (wave up), "zoom in" (bringing fingers together), and "zoom out" (spreading fingers apart). If the device 100 is currently not executing any application or if the application currently being executed by the device 100 does not have a gesture library 555 associated with it, then, even if the gesture identifier 530 uses the gesture template 537 to identify a known gesture based on the movement of the object 240, no action is taken by the gesture identifier 530 based on identifying the gesture. That is, there is no action output 560 corresponding with the identified gesture, because there is no gesture library 555 to look up.

According to one embodiment, the gesture identifier 530 may not use the gesture template 537 to identify a gesture when no application is being executed by the device 100 or when an application without an associated gesture library 555 is being executed by the device 100. According to another embodiment, the gesture identifier 530 may not begin to process any frames of data 520 before receiving a trigger signal 540. The trigger signal 540 is detailed below with reference to Figure 6. According to another embodiment not forming part of the present invention, the gesture identifier 530 may process an initial set of frames of data 520 and then not process another set of frames of data 520 needed to identify the gesture until the trigger signal 540 is received. For example, the gesture identifier 530 may process a particular number of frames of data 520 or a number of frames of data 520 representing a particular length of time (number of time instants) and then stop processing further frames of data 520 until the trigger signal 540 is received. According to yet another embodiment not forming part of the present invention, the gesture identifier 530 may continually process frames of data 520 as they are output from the data collection engine 510.

Regardless of the behavior of the gesture identifier 530 based on the trigger signal 540, the lack of an associated gesture library 555, or the lack of an application being executed at all, the data collection engine 510 still outputs the frames of data 520. This is because the light intensity 115 measurements may be used for background functions such as adjustment of the screen 120 backlighting, for example, based on the detected ambient light, even if gesture detection is not to be performed. Some of these background functions are detailed below with reference to Figure 6.

Figure 6 is a block diagram of a system 610 to control the two or more ambient light sensors 110. As noted with reference to Figure 5, the functions described for the system 610 may be performed by one or more processors and one or more memory devices, which may also perform other functions within the device 100. The system 610 may be regarded as a background processing system, because it may operate continuously to dynamically control the ALSs 110. The system 610 receives the light intensity 115 measurements output by the ALSs 110 to the data collection engine 510 as frames of data 520. In alternate embodiments, the ALSs 110 may directly output light intensity 115 measurements to the system 610 as well as to the data collection engine 510. The system 610 may also receive additional information 620. This additional information 620 may indicate, for example, whether the device 100 is currently executing an application and, if so, which application the device 100 is currently executing.

Based on the light intensity 115 measurements (directly or in the form of frames of data 520) and the additional information 620, the system 610 adjusts the sensitivity or wavelength band or range or both for each ALS 110. For example, based on the available light (measured ambient light intensity 115), the system 610 may change the wavelength range for the ALSs 110 via a control signal 630 from the system 610 to one or more of the ALSs 110. The change (adjustment of wavelength range) may ensure that the ALSs 110 are focused in the correct wavelength (frequency) band for the current conditions. As another example, based on a change in available light (e.g., based on switching a light on or off), the system 610 may change the sensitivity of the ALSs 110. Any order of switching lights produces a new range of change in light intensity 115 to which the ALSs 110 must adapt. For example, the range of change of light intensity 115 to which the ALSs 110 are sensitive may be 50 - 250 lux. In a darker environment (e.g., a conference room during a presentation) the range of change of light intensity 115 to which the ALSs 110 are sensitive may be 2 - 15 lux. The adjustment of the ALSs 110 through the control signal 630 may be done continuously, periodically, or based on a trigger event such as, for example, a change in the application being executed by the device 100. For example, sensitivity adjustment may be done automatically once for every 5 frames of data 520. The system 610 may also adjust the order and frequency of light intensity 115 measurements by the ALSs 110. For example, based on additional information 620 indicating that a particular application is being executed by the device 100, the system 610 may send control signals 630 to have the ALSs 110 collect light intensity 115 samples for each cycle (frame of data 520) in a particular order and with a particular frequency.

In addition to controlling the ALSs 110, the system 610 may provide the trigger signal 540 to the gesture identifier 530 (see Figure 5). Because the system 610 monitors the light intensity 115 measurements in the frames of data 520 to fulfill the background functions described above, the system 610 may additionally identify trigger events that signal when gesture processing should be initiated by the gesture identifier 530 and output the trigger signal 540 accordingly. For example, the system 610 may output a trigger signal 540 to the gesture identifier 530 when it receives a frame of data 520 that indicates a change in light intensity 115 measured by one or more ALSs 110. The change in light intensity 115 measurement may indicate a start of a movement of an object 240 and, thus, the start of a gesture. In various embodiments, the change in measured light intensity 115 may be 10% +/- 3% or higher before the system 610 outputs a trigger signal 540. In an embodiment, the change in measured light intensity 115 may be 20% +/- 5% or higher before the system 610 outputs a trigger signal 540. In an embodiment, the change in measured light intensity may be 25% +/- 5% or higher before the system 610 outputs a trigger signal 540.

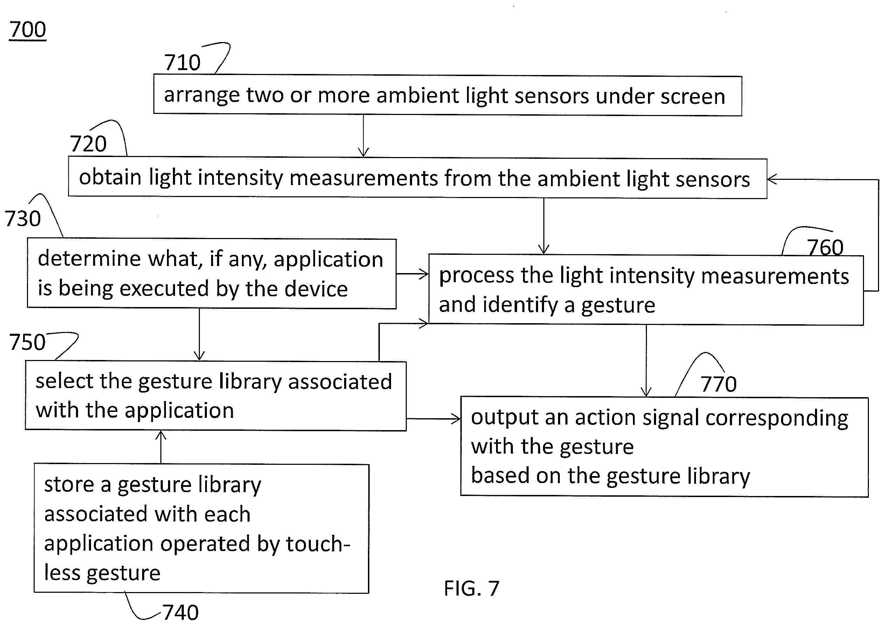

Figure 7 shows the process flow of a method 700 of detecting a gesture according to embodiments discussed above. At block 710, arranging two or more ALSs 110 under the screen 120 of a device 100 may be according to the embodiments shown in Figure 1, 3, and 4 or in alternate arrangements according to the guidelines discussed above. Obtaining light intensity 115 measurements from the ALSs 110 (block 720) may be in photometric or radiometric units as discussed above. Obtaining (receiving) the light intensity 115 measurements may also include dynamically controlling the ALSs 110 with the system 610 to modify the wavelength range or spectral sensitivity of each ALS 110, for example. As discussed with reference to Figure 6, the control by the system 610 may be based on light intensity 115 measurements by the ALSs 110, for example. Determining what, if any, application is being executed by the device 100, at block 730, may be done by the gesture identifier 530 and may be part of the additional information 620 provided to the system 610. At block 740, the process includes storing a gesture library 555 associated with each application that may be operated using touch-less gestures in the gesture library storage 550. Selecting the gesture library 555 associated with the application being executed by the device 100 may be done by the gesture identifier 530 at block 750. Block 750 may also include the gesture identifier 530 determining that no gesture library 555 is applicable because the device 100 is not executing any application or is executing an application without an associated gesture library 555. At block 760, processing the light intensity 115 measurements and identifying a gesture involves the data collection engine 510 outputting the frames of data 520 and the gesture identifier 530 using a comparison of light intensity 115 measurements in addition to the gesture template 537. Block 760 may also include the system 610 sending a trigger signal 540 to the gesture identifier 530 to begin or continue the gesture processing. Block 760 may further include the gesture identifier 530 not identifying the gesture at all based on not having a gesture library 555 available. At block 770, outputting an action signal 560 corresponding with the gesture based on the gesture library 555 is done by the gesture identifier 530 as detailed above.

Figure 8 is a block diagram of an exemplary device 100 that facilitates touch-less gesture detection as described in embodiments above. While various components of the device 100 are depicted, alternate embodiments of the device 100 may include a subset of the components shown or include additional components not shown in Figure 8. The device 100 includes a DSP 801 and a memory 802. The DSP 801 and memory 802 may provide, in part or in whole, the functionality of the system 500 (Figure 5). As shown, the device 100 may further include an antenna and front-end unit 803, a radio frequency (RF) transceiver 804, an analog baseband processing unit 805, a microphone 806, an earpiece speaker 807, a headset port 808, a bus 809, such as a system bus or an input/output (I/O) interface bus, a removable memory card 810, a universal serial bus (USB) port 811, an alert 812, a keypad 813, a short range wireless communication sub-system 814, a liquid crystal display (LCD) 815, which may include a touch sensitive surface, an LCD controller 816, a charge-coupled device (CCD) camera 817, a camera controller 818, and a global positioning system (GPS) sensor 819, and a power management module 820 operably coupled to a power storage unit, such as a battery 826. In various embodiments, the device 100 may include another kind of display that does not provide a touch sensitive screen. In one embodiment, the DSP 801 communicates directly with the memory 802 without passing through the input/output interface ("Bus") 809.

In various embodiments, the DSP 801 or some other form of controller or central processing unit (CPU) operates to control the various components of the device 100 in accordance with embedded software or firmware stored in memory 802 or stored in memory contained within the DSP 801 itself. In addition to the embedded software or firmware, the DSP 801 may execute other applications stored in the memory 802 or made available via information media such as portable data storage media like the removable memory card 810 or via wired or wireless network communications. The application software may comprise a compiled set of machine-readable instructions that configure the DSP 801 to provide the desired functionality, or the application software may be high-level software instructions to be processed by an interpreter or compiler to indirectly configure the DSP 801.

The antenna and front-end unit 803 may be provided to convert between wireless signals and electrical signals, enabling the device 100 to send and receive information from a cellular network or some other available wireless communications network or from a peer device 100. In an embodiment, the antenna and front-end unit 803 may include multiple antennas to support beam forming and/or multiple input multiple output (MIMO) operations. As is known to those skilled in the art, MIMO operations may provide spatial diversity, which can be used to overcome difficult channel conditions or to increase channel throughput. Likewise, the antenna and front-end unit 803 may include antenna tuning or impedance matching components, RF power amplifiers, or low noise amplifiers.

In various embodiments, the RF transceiver 804 facilitates frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 805 or the DSP 801 or other central processing unit. In some embodiments, the RF Transceiver 804, portions of the antenna and front-end unit 803, and the analog base band processing unit 805 may be combined in one or more processing units and/or application specific integrated circuits (ASICs).

Note that, in this diagram, the radio access technology (RAT) RAT1 and RAT2 transceivers 821, 822, the IXRF 823, the IRSL 824 and Multi-RAT subsystem 825 are operably coupled to the RF transceiver 804 and analog baseband processing unit 805 and then also coupled to the antenna and front-end unit 803 via the RF transceiver 804. As there may be multiple RAT transceivers, there will typically be multiple antennas or front ends 803 or RF transceivers 804, one for each RAT or band of operation.

The analog baseband processing unit 805 may provide various analog processing of inputs and outputs for the RF transceivers 804 and the speech interfaces (806, 807, 808). For example, the analog baseband processing unit 805 receives inputs from the microphone 806 and the headset 808 and provides outputs to the earpiece 807 and the headset 808. To that end, the analog baseband processing unit 805 may have ports for connecting to the built-in microphone 806 and the earpiece speaker 807 that enable the device 100 to be used as a cell phone. The analog baseband processing unit 805 may further include a port for connecting to a headset or other hands-free microphone and speaker configuration. The analog baseband processing unit 805 may provide digital-to-analog conversion in one signal direction and analog-to-digital conversion in the opposing signal direction. In various embodiments, at least some of the functionality of the analog baseband processing unit 805 may be provided by digital processing components, for example by the DSP 801 or by other central processing units.

The DSP 801 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 801 may perform modulation, coding, interleaving, and spreading, and for a receiver function the DSP 801 may perform despreading, deinterleaving, decoding, and demodulation. In another embodiment, for example in an orthogonal frequency division multiplex access (OFDMA) technology application, for the transmitter function the DSP 801 may perform modulation, coding, interleaving, inverse fast Fourier transforming, and cyclic prefix appending, and for a receiver function the DSP 801 may perform cyclic prefix removal, fast Fourier transforming, deinterleaving, decoding, and demodulation. In other wireless technology applications, yet other signal processing functions and combinations of signal processing functions may be performed by the DSP 801.

The DSP 801 may communicate with a wireless network via the analog baseband processing unit 805. In some embodiments, the communication may provide Internet connectivity, enabling a user to gain access to content on the Internet and to send and receive e-mail or text messages. The input/output interface ("Bus") 809 interconnects the DSP 801 and various memories and interfaces. The memory 802 and the removable memory card 810 may provide software and data to configure the operation of the DSP 801. Among the interfaces may be the USB interface 811 and the short range wireless communication sub-system 814. The USB interface 811 may be used to charge the device 100 and may also enable the device 100 to function as a peripheral device to exchange information with a personal computer or other computer system. The short range wireless communication sub-system 814 may include an infrared port, a Bluetooth interface, an IEEE 802.11 compliant wireless interface, or any other short range wireless communication sub-system, which may enable the device to communicate wirelessly with other nearby client nodes and access nodes. The short-range wireless communication sub-system 814 may also include suitable RF Transceiver, Antenna and Front End subsystems.

The input/output interface ("Bus") 809 may further connect the DSP 801 to the alert 812 that, when triggered, causes the device 100 to provide a notice to the user, for example, by ringing, playing a melody, or vibrating. The alert 812 may serve as a mechanism for alerting the user to any of various events such as an incoming call, a new text message, and an appointment reminder by silently vibrating, or by playing a specific pre-assigned melody for a particular caller.

The keypad 813 couples to the DSP 801 via the I/O interface ("Bus") 809 to provide one mechanism for the user to make selections, enter information, and otherwise provide input to the device 100. The keypad 813 may be a full or reduced alphanumeric keyboard such as QWERTY, DVORAK, AZERTY and sequential types, or a traditional numeric keypad with alphabet letters associated with a telephone keypad. The input keys may likewise include a track wheel, track pad, an exit or escape key, a trackball, and other navigational or functional keys, which may be inwardly depressed to provide further input function. Another input mechanism may be the LCD 815, which may include touch screen capability and also display text and/or graphics to the user. The LCD controller 816 couples the DSP 801 to the LCD 815.

The CCD camera 817, if equipped, enables the device 100 to make digital pictures. The DSP 801 communicates with the CCD camera 817 via the camera controller 818. In another embodiment, a camera operating according to a technology other than Charge Coupled Device cameras may be employed. The GPS sensor 819 is coupled to the DSP 801 to decode global positioning system signals or other navigational signals, thereby enabling the device 100 to determine its position. The GPS sensor 819 may be coupled to an antenna and front end (not shown) suitable for its band of operation. Various other peripherals may also be included to provide additional functions, such as radio and television reception.

In various embodiments, device 100 comprises a first Radio Access Technology (RAT) transceiver 821 and a second RAT transceiver 822. As shown in Figure 16, and described in greater detail herein, the RAT transceivers '1' 821 and '2' 822 are in turn coupled to a multi-RAT communications subsystem 825 by an Inter-RAT Supervisory Layer Module 824. In turn, the multi- RAT communications subsystem 825 is operably coupled to the Bus 809. Optionally, the respective radio protocol layers of the first Radio Access Technology (RAT) transceiver 821 and the second RAT transceiver 822 are operably coupled to one another through an Inter-RAT exchange Function (IRXF) Module 823.

While most gesture libraries 555 are associated with a particular application, as discussed above, a specific embodiment of a gesture library 555 discussed below may apply to any application as well as when no application is being executed by the device 100. Embodiments described above specify that, when the device 100 is executing an application that does not have a gesture library 555 associated with it or when the device 100 is not executing an application at all, the gesture identifier 530 does not output an action output 560 based on a gesture, because there is no gesture library 555 to indicate an action output 560 that corresponds with the gesture. According to some of the embodiments detailed below, a display navigation gesture library 555 can be thought of as a default gesture library 555 in those circumstances.

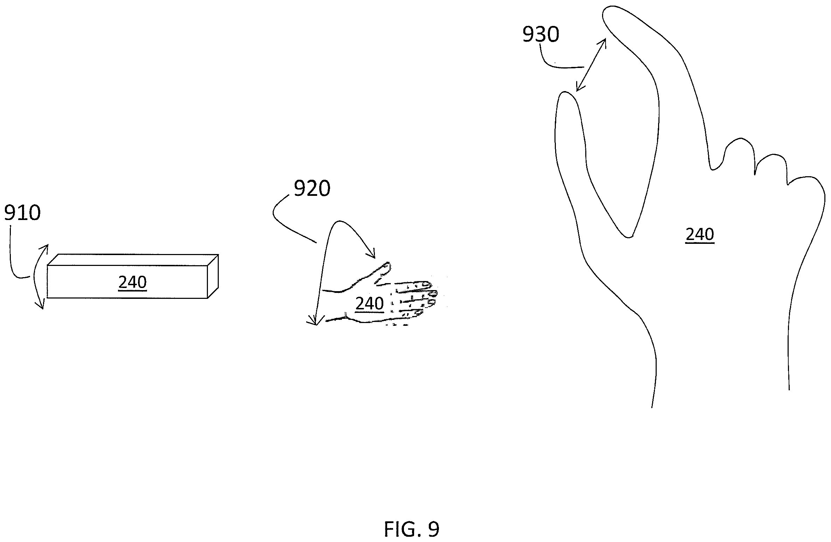

Figure 9 illustrates exemplary gestures associated with display navigation. When the object tilts back-and-forth according to the motion 910 shown in Figure 9, the tilting gesture may correspond with a change in the display shown on the screen 120 of the device 100 or volume of audio being played by the device, for example. Variations (e.g., double-tilt or two tilts in sequence) may represent different gestures according to the gesture template 537. The twisting or rotating motion 920 of the object 240 (e.g., a hand) is another exemplary gesture that may control the device 100 display. For example, the gesture identifier 530 may detect the twist and generate an action output 560 to another processor of the device (e.g., DSP 801) to change a display to the previous or next image. The motion 930 made by the two fingers of the hand object 240 - bringing the fingers together or moving them apart - may generate an action output 560 to enlarge or reduce (i.e., zoom in or zoom out on) an image on the screen 120. Numerous variations on the illustrative gestures, as well as additional gestures, are contemplated to control navigation of the device 100 display. As noted above, which gesture generates which action output 560 is specified by the navigation gesture library 555.

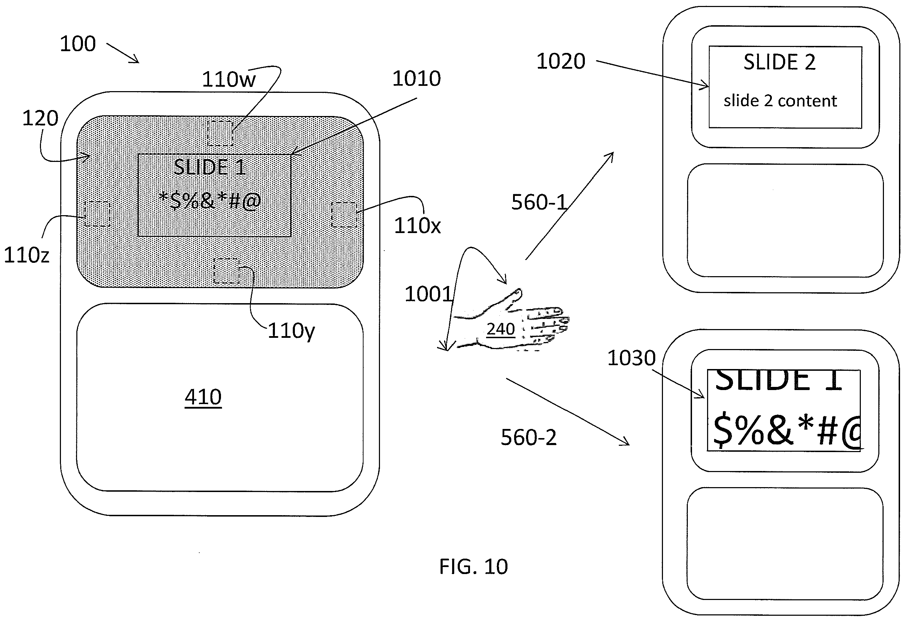

Figure 10 shows an exemplary device 100 that may facilitate navigation based on touch-less gestures. The device 100 shown in Figure 10 includes four ALSs 110w, 110x, 110y, 110z arranged around the screen 120. The image 1010 is an exemplary initial image displayed on the device 100. Based on the gestures detected in accordance with the light intensity 115 measurements of the ALSs 110 over several measurement cycles or frames of data 520, the image 1010 may be changed in one or more ways. For example, an action output 560-1 from the gesture identifier 530 based on the exemplary gesture (motion 1001) may cause the display to change to a previous or subsequent image 1020. As another example, the same gesture (motion 1001) may instead cause the image 1010 to appear reduced (zoomed out) or enlarged (zoomed in) as in the image 1030 based on the correspondence in the navigation gesture library 555. As discussed with reference to Figure 5 above, the actual action output 560 generated by a given gesture is determined by the correspondence stored in the gesture library 555 or, in this particular case, the navigation gesture library 555.

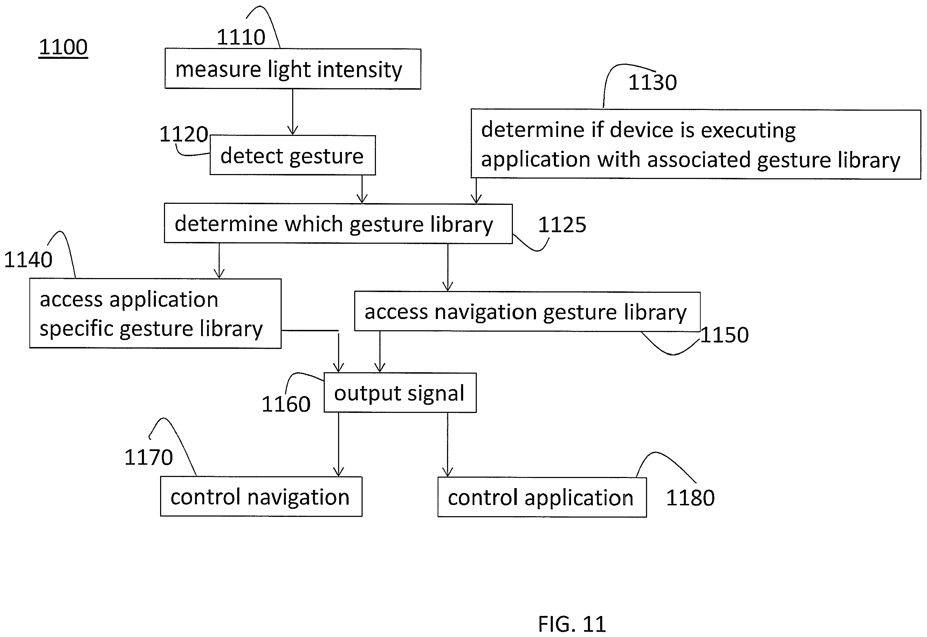

Figure 11 is a process flow of an exemplary method 1100 of navigating the display of a device 100 based on touch-less gestures. At block 1110, measuring light intensity 115 with the ALSs 110 is based on the control by the system 610 as discussed above with reference to Figure 6. Detecting the gesture at block 1120 includes the gesture identifier 530 accessing the gesture template 537 as detailed with reference to Figure 5 above. Determining if the device 100 is executing an application with an associated gesture library 555 at block 1130 (as opposed to not executing an application at all or executing an application that does not have an associated gesture library 555) leads to the gesture identifier 530 determining which gesture library 555 to use (1125). According to one embodiment, the navigation gesture library 555 supplements the gesture library 555 of an application such that both gesture libraries 555 are used by the gesture identifier 530. Thus, based on the determination (block 1130), when the device 100 is executing an application that has an associated gesture library 555, both accessing the application specific gesture library 555 (1140) and accessing the navigation gesture library 555 (1150) may be done by the gesture identifier 530 based on the determination of which gesture library 555 to use (1125). When the application specific gesture library 555 and the navigation gesture library 555 contradict each other in this case (each has a different action output 560 that corresponds with the same gesture), then one of those may be selected as the controlling gesture library 555. For example, the application specific gesture library 555 may control in order to conform to expectations of a user who has selected that application for execution by the device 100. According to another embodiment, the navigation gesture library 555 does not supplement the application specific gesture library 555. According to this embodiment, based on the determination (block 1130), when the device 100 is executing an application that has an associated gesture library 555, only accessing the application specific gesture library 555 (1140), instead of the navigation gestures library 555, may be done by the gesture identifier 530 according to the determination of which gesture library to use (1125).

Outputting an action output 560 at block 1160 includes the gesture identifier 530 resolving any contradiction in the application specific gesture library 555 and the navigation gesture library 555, when both are used. The process of controlling navigation (block 1170), may be performed by one or more of the processors of the device 100 that are discussed above (e.g., DSP 801). Based on the determination (block 1130) and the specific embodiment, the resulting action output 560 may result in controlling an aspect of the application being executed (1180) rather than a display of the device 100. That is, when the gesture identifier 530 uses the application specific gesture library 555 instead of the navigation gesture library 555 or the gesture identifier 530 resolves a conflict between the application specific gesture library 555 and the navigation gesture library 555 by using the application specific gesture library 555, then the resulting action output 560 will control the application rather than the display navigation.

While several embodiments have been provided in the present disclosure, it should be understood that the disclosed systems and methods may be embodied in many other specific forms without departing from the scope of the present invention as defined by the appended claims. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present invention as defined by the appended claims. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope of the present invention as defined by the appended claims.

## Claims

1. A device (100) to facilitate display navigation by touch-less gesture, the device (100) comprising:
three or more ambient light sensors (110) arranged at respective surface locations of the device (100), each of the three or more ambient light sensors (110) configured to cyclically measure light intensity (115) at the respective surface location, wherein each of the ambient light sensors (110) measures the light intensity (115) in sequence with the other ambient light sensors (110) during a measurement cycle;
a processor (530) configured to detect, based on changes in the light intensity (115) measured by the three or more ambient light sensors (110) at different measurement cycles, a touch-less gesture performed by an object (240) in touch-less communication with the device (100) and output a signal (560) corresponding with the detected gesture, wherein the detected gesture is based on a movement of the object (240) in three dimensions;
a navigation gesture library (555); and
an application gesture library (555) associated with a particular application;
wherein, to determine the signal (560) corresponding with the detected gesture, the processor (530) is further configured to access the navigation gesture library (555) and/or the application gesture library (555), wherein the processor (530) determines to access the navigation gesture library (555) when the device (100) is not executing an application with an associated application gesture library (555), and when the device (100) is executing the particular application associated with the application gesture library (555), the processor (530) determines to access the application gesture library (555) and the navigation gesture library (555) if the navigation gesture library (555) supplements the application gesture library (555), and to access only the application gesture library (555) if the navigation gesture library (555) does not supplement the application gesture library (555), and wherein each of the application gesture library (555) and the navigation gesture library (555) is configured to store two or more gestures and corresponding two or more signals (560);
wherein the processor (530) is further configured such that detecting the gesture is only initiated if the movement of the object (240) causes a minimum change in light intensity (115), wherein the minimum change in light intensity (115) indicates a start of the gesture and is determined based on at least two light intensity (115) measurements from one or more of the ambient light sensors (110); and
wherein three ambient light sensors (110x, 110y, 110z) of the three or more ambient light sensors (110) are arranged at the respective surface locations of the device (100) in a triangular pattern such that one ambient light sensor (110x) of the three ambient light sensors (110x, 110y, 110z) is offset with respect to the other two ambient light sensors (110y, 110z).

2. The device (100) according to claim 1, wherein, when the processor (530) determines to access the application gesture library (555) and the navigation gesture library (555), and when the detected gesture has a corresponding first signal (560) in the navigation gesture library and a corresponding second signal (560) in the application gesture library (555), the processor (530) outputs the second signal (560).

3. The device (100) according to claim 1, further comprising a second processor (801) configured to change a display of the device (100) to a previous or a next image based on the signal (560).

4. The device (100) according to claim 3, wherein the second processor (801) increases or decreases a zoom level of an image on the display.

5. A method (1100) of navigating a display of a device (100) by touch-less gesture, the method (1100) comprising:
cyclically measuring (1110), using three or more ambient light sensors (110) arranged at respective surface locations of the device (100), light intensity (115) at the respective surface locations, wherein each of the ambient light sensors (110) measures the light intensity (115) in sequence with the other ambient light sensors (110) during a measurement cycle;
detecting (1120), using a processor (530), and based on changes in the light intensity (115) measured by the three or more ambient light sensors (110) at different measurement cycles, a touch-less gesture performed by an object (240) in touch-less communication with the device (100) wherein the detected gesture is based on a movement of the object (240) in three dimensions;
to determine a signal (560) corresponding with the detected gesture, accessing (1140, 1150), using the processor (530), a navigation gesture library (555) and/or an application gesture library (555) associated with a particular application, wherein the navigation gesture library (555) is accessed when the device (100) is not executing an application with an associated application gesture library (555), and when the device (100) is executing the particular application associated with the application gesture library (555), the application gesture library (555) and the navigation gesture library (555) are accessed if the navigation gesture library (555) supplements the application gesture library (555), and only the application gesture library (555) is accessed if the navigation gesture library (555) does not supplement the application gesture library (555), and wherein each of the application gesture library (555) and the navigation gesture library (555) is configured to store two or more gestures and corresponding two or more signals (560); and
outputting (1160), using the processor (530), the determined signal (560);
wherein the processor (530) only initiates detecting the gesture if the movement of the object (240) causes a minimum change in light intensity (115), wherein the minimum change in light intensity (115) indicates a start of the gesture and is determined based on at least two light intensity (115) measurements from one or more of the ambient light sensors (110); and
wherein three ambient light sensors (110x, 110y, 110z) of the three or more ambient light sensors (110) are arranged at the respective surface locations of the device (100) in a triangular pattern such that one ambient light sensor (110x) of the three ambient light sensors (110x, 110y, 110z) is offset with respect to the other two ambient light sensors (110y, 110z).

6. The method (1100) according to claim 5, wherein outputting (1160) the determined signal (560) comprises, when the application gesture library (555) and the navigation gesture library (555) are accessed, and when the detected gesture has a corresponding first signal (560) in the navigation gesture library (555) and a corresponding second signal (560) in the application gesture library (555), outputting the second signal (560).

## Patentansprüche

1. Vorrichtung (100), um eine Anzeigenavigation durch berührungslose Gesten zu ermöglichen, wobei die Vorrichtung (100) Folgendes umfasst:
drei oder mehr Umgebungslichtsensoren (110), die an entsprechenden Oberflächenorten der Vorrichtung (100) angeordnet sind, wobei jeder der drei oder mehr Umgebungslichtsensoren (110) konfiguriert ist, zyklisch die Lichtintensität (115) bei den entsprechenden Oberflächenorten zu messen, und während eines Messzyklus jeder der Umgebungslichtsensoren (110) die Lichtintensität (115) der Reihe nach mit den weiteren Umgebungslichtsensoren (110) misst;
einen Prozessor (530), der konfiguriert ist, auf der Grundlage von Änderungen der Lichtintensität (115), die durch die drei oder mehr Umgebungslichtsensoren (110) zu verschiedenen Messzyklen gemessen wird, eine berührungslose Geste, die durch einen Gegenstand (240) in berührungsloser Kommunikation mit der Vorrichtung (100) durchgeführt wird, zu detektieren, und ein Signal (560) auszugeben, das der detektierten Geste entspricht, wobei die detektierte Geste auf einer Bewegung des Gegenstands (240) in drei Dimensionen basiert;
eine Navigationsgestenbibliothek (555) und
eine Anwendungsgestenbibliothek (555), die einer bestimmten Anwendung zugeordnet ist; wobei
der Prozessor (530) ferner konfiguriert ist, auf die Navigationsgestenbibliothek (555) und/oder die Anwendungsgestenbibliothek (555) zuzugreifen, um das Signal (560), das der detektierten Geste entspricht, zu bestimmen, wobei der Prozessor (530) bestimmt, auf die Navigationsgestenbibliothek (555) zuzugreifen, wenn die Vorrichtung (100) keine Anwendung mit einer zugeordneten Anwendungsgestenbibliothek (555) ausführt, und dann, wenn die Vorrichtung (100) die bestimmte Anwendung, die der Anwendungsgestenbibliothek (555) zugeordnet ist, ausführt, der Prozessor (530) bestimmt, auf die Anwendungsgestenbibliothek (555) und die Navigationsgestenbibliothek (555) zuzugreifen, wenn die Navigationsgestenbibliothek (555) die Anwendungsgestenbibliothek (555) ergänzt, und lediglich auf die Anwendungsgestenbibliothek (555) zuzugreifen, wenn die Navigationsgestenbibliothek (555) die Anwendungsgestenbibliothek (555) nicht ergänzt, wobei sowohl die Anwendungsgestenbibliothek (555) als auch die Navigationsgestenbibliothek (555) konfiguriert ist, zwei oder mehr Gesten und zwei oder mehr entsprechende Signale (560) zu speichern;
der Prozessor (530) ferner derart konfiguriert ist, dass ein Detektieren der Geste lediglich initiiert wird, wenn die Bewegung des Objekts (240) eine minimale Änderung der Lichtintensität (115) bewirkt, wobei die minimale Änderung der Lichtintensität (115) einen Start der Geste anzeigt und auf der Grundlage von mindestens zwei Messwerten von Lichtintensitäten (115) von einem oder mehreren Umgebungslichtsensoren (110) bestimmt wird; und
drei Umgebungslichtsensoren (110x, 110y, 110z) der drei oder mehr Umgebungslichtsensoren (110) an den entsprechenden Oberflächenorten der Vorrichtung (100) in einem dreieckigen Muster angeordnet sind, derart, dass ein Umgebungslichtsensor (110x) der drei Umgebungslichtsensoren (110x, 110y, 110z) in Bezug auf die weiteren zwei Umgebungslichtsensoren (110y, 110z) versetzt ist.

2. Vorrichtung (100) nach Anspruch 1, wobei dann, wenn der Prozessor (530) bestimmt, auf die Anwendungsgestenbibliothek (555) und die Navigationsgestenbibliothek (555) zuzugreifen, und wenn die detektierte Geste ein entsprechendes erstes Signal (560) in der Navigationsgestenbibliothek und ein entsprechendes zweites Signal (560) in der Anwendungsgestenbibliothek (555) aufweist, der Prozessor (530) das zweite Signal (560) ausgibt.

3. Vorrichtung (100) nach Anspruch 1, die ferner einen zweiten Prozessor (801) umfasst, der konfiguriert ist, auf der Grundlage des Signals (560) eine Anzeige der Vorrichtung (100) zu einem vorherigen oder einem nächsten Bild zu ändern.

4. Vorrichtung (100) nach Anspruch 3, wobei der zweite Prozessor (801) eine Zoomstufe eines Bildes auf der Anzeige erhöht oder verringert.

5. Verfahren (1100) zum Navigieren einer Anzeige einer Vorrichtung (100) durch berührungslose Gesten, wobei das Verfahren (1100) Folgendes umfasst:
zyklisches Messen (1110) unter Verwendung von drei oder mehr Umgebungslichtsensoren (110), die an entsprechenden Oberflächenorten der Vorrichtung (100) angeordnet sind, der Lichtintensität (115) bei den entsprechenden Oberflächenorten, wobei während eines Messzyklus jeder der Umgebungslichtsensoren (110) die Lichtintensität (115) der Reihe nach mit den weiteren Umgebungslichtsensoren (110) misst;
Detektieren (1120) unter Verwendung eines Prozessors (530) und auf der Grundlage von Änderungen der Lichtintensität (115), die durch die drei oder mehr Umgebungslichtsensoren (110) zu verschiedenen Messzyklen gemessen wird, einer berührungslose Geste, die durch einen Gegenstand (240) in berührungsloser Kommunikation mit der Vorrichtung (100) durchgeführt wird, wobei die detektierte Geste auf einer Bewegung des Gegenstands (240) in drei Dimensionen basiert;
Zugreifen (1140, 1150) unter Verwendung des Prozessors (530) auf eine Navigationsgestenbibliothek (555) und/oder eine Anwendungsgestenbibliothek (555), die einer bestimmten Anwendung zugeordnet ist, um ein Signal (560) zu bestimmen, das der detektierten Geste entspricht, wobei auf die Navigationsgestenbibliothek (555) zugegriffen wird, wenn die Vorrichtung (100) keine Anwendung mit einer zugeordneten Anwendungsgestenbibliothek (555) ausführt, und dann, wenn die Vorrichtung (100) die bestimmte Anwendung, die der Anwendungsgestenbibliothek (555) zugeordnet ist, ausführt, auf die Anwendungsgestenbibliothek (555) und die Navigationsgestenbibliothek (555) zugegriffen wird, wenn die Navigationsgestenbibliothek (555) die Anwendungsgestenbibliothek (555) ergänzt, und lediglich auf die Anwendungsgestenbibliothek (555) zugegriffen wird, wenn die Navigationsgestenbibliothek (555) die Anwendungsgestenbibliothek (555) nicht ergänzt, wobei sowohl die Anwendungsgestenbibliothek (555) als auch die Navigationsgestenbibliothek (555) konfiguriert ist, zwei oder mehr Gesten und entsprechende zwei oder mehr Signale (560) zu speichern; und
Ausgeben (1160) des bestimmten Signals (560) unter Verwendung des Prozessors (530); wobei
der Prozessor (530) ein Detektieren der Geste lediglich initiiert, wenn die Bewegung des Objekts (240) eine minimale Änderung der Lichtintensität (115) bewirkt, wobei die minimale Änderung der Lichtintensität (115) einen Start der Geste anzeigt und auf der Grundlage von mindestens zwei Messwerten von Lichtintensitäten (115) von einem oder mehreren Umgebungslichtsensoren (110) bestimmt wird; und
drei Umgebungslichtsensoren (110x, 110y, 110z) der drei oder mehr Umgebungslichtsensoren (110) an den entsprechenden Oberflächenorten der Vorrichtung (100) in einem dreieckigen Muster angeordnet sind, derart, dass ein Umgebungslichtsensor (110x) der drei Umgebungslichtsensoren (110x, 110y, 110z) in Bezug auf die weiteren zwei Umgebungslichtsensoren (110y, 110z) versetzt ist.

6. Verfahren (1100) nach Anspruch 5, wobei das Ausgeben (1160) des bestimmten Signals (560) dann, wenn auf die Anwendungsgestenbibliothek (555) und die Navigationsgestenbibliothek (555) zugegriffen wird und wenn die detektierte Geste ein entsprechendes erstes Signal (560) in der Navigationsgestenbibliothek (555) und ein entsprechendes zweites Signal (560) in der Anwendungsgestenbibliothek (555) aufweist, ein Ausgeben des zweiten Signals (560) umfasst.

## Revendications

1. Dispositif (100) destiné à faciliter la navigation sur un affichage par un geste sans contact, le dispositif (100) comprenant :
trois capteurs de lumière ambiante (110) ou plus disposés à des emplacements de surface respectifs du dispositif (100), chacun des trois capteurs de lumière ambiante (110) ou plus étant configuré pour mesurer cycliquement l'intensité lumineuse (115) à l'emplacement de surface respectif, dans lequel chacun des capteurs de lumière ambiante (110) mesure l'intensité lumineuse (115) en séquence avec les autres capteurs de lumière ambiante (110) pendant un cycle de mesure ;
un processeur (530) configuré pour détecter, sur la base de variations de l'intensité lumineuse (115) mesurée par les trois capteurs de lumière ambiante (110) ou plus à différents cycles de mesure, un geste sans contact effectué par un objet (240) en communication sans contact avec le dispositif (100) et pour délivrer un signal (560) correspondant au geste détecté, dans lequel le geste détecté est basé sur un mouvement de l'objet (240) en trois dimensions ;
une bibliothèque de gestes de navigation (555) ; et
une bibliothèque de gestes d'application (555) associée à une application particulière ;
dans lequel, pour déterminer le signal (560) correspondant au geste détecté, le processeur (530) est en outre configuré pour accéder à la bibliothèque de gestes de navigation (555) et/ou à la bibliothèque de gestes d'application (555), dans lequel le processeur (530) détermine d'accéder à la bibliothèque de gestes de navigation (555) lorsque le dispositif (100) n'exécute pas une application avec une bibliothèque de gestes d'application associée (555), et lorsque le dispositif (100) exécute l'application particulière associée à la bibliothèque de gestes d'application (555), le processeur (530) détermine d'accéder à la bibliothèque de gestes d'application (555) et à la bibliothèque de gestes de navigation (555) si la bibliothèque de gestes de navigation (555) complète la bibliothèque de gestes d'application (555), et d'accéder uniquement à la bibliothèque de gestes d'application (555) si la bibliothèque de gestes de navigation (555) ne complète pas la bibliothèque de gestes d'application (555), et dans lequel chacune de la bibliothèque de gestes d'application (555) et de la bibliothèque de gestes de navigation (555) est configurée pour stocker deux gestes ou plus et deux signaux correspondants (560) ou plus ;
dans lequel le processeur (530) est en outre configuré de façon que la détection du geste ne soit déclenchée que si le mouvement de l'objet (240) provoque une variation minimale de l'intensité lumineuse (115), dans lequel la variation minimale de l'intensité lumineuse (115) indique un début du geste et est déterminée sur la base d'au moins deux mesures d'intensité lumineuse (115) d'un ou plusieurs des capteurs de lumière ambiante (110) ; et
dans lequel trois capteurs de lumière ambiante (110x, 110y, 110z) des trois capteurs de lumière ambiante (110) ou plus sont disposés aux emplacements de surface respectifs du dispositif (100) selon un motif triangulaire de façon qu'un capteur de lumière ambiante (110x) des trois capteurs de lumière ambiante (110x, 110y, 110z) soit décalé par rapport aux deux autres capteurs de lumière ambiante (110y, 110z).

2. Dispositif (100) selon la revendication 1, dans lequel, lorsque le processeur (530) détermine d'accéder à la bibliothèque de gestes d'application (555) et à la bibliothèque de navigation (555), et lorsque le geste détecté comporte un premier signal correspondant (560) dans la bibliothèque de gestes de navigation et un second signal correspondant (560) dans la bibliothèque de gestes d'application (555), le processeur (530) délivre le second signal (560).

3. Dispositif (100) selon la revendication 1, comprenant en outre un second processeur (801) configuré pour transformer un affichage du dispositif (100) en une image précédente ou suivante sur la base du signal (560).

4. Dispositif (100) selon la revendication 3, dans lequel le second processeur (801) augmente ou réduit un niveau de zoom d'une image sur l'affichage.

5. Procédé (1100) de navigation sur un affichage d'un dispositif (100) par un geste sans contact, le procédé (1100) comprenant les étapes consistant à :
mesurer cycliquement (1110), à l'aide d'au moins trois capteurs de lumière ambiante (110) disposés à des emplacements de surface respectifs de l'appareil (100), l'intensité lumineuse (115) aux emplacements de surface respectifs, dans lequel chacun des capteurs de lumière ambiante (110) mesure l'intensité lumineuse (115) en séquence avec les autres capteurs de lumière ambiante (110) pendant un cycle de mesure ;
détecter (1120), à l'aide d'un processeur (530), et sur la base de variations de l'intensité lumineuse (115) mesurée par les trois capteurs de lumière ambiante (110) ou plus à différents cycles de mesure, un geste sans contact effectué par un objet (240) en communication sans contact avec le dispositif (100), dans lequel le geste détecté est basé sur un mouvement de l'objet (240) en trois dimensions ;
afin de déterminer un signal (560) correspondant au geste détecté, accéder (1140, 1150), à l'aide du processeur (530), à une bibliothèque de gestes de navigation (555) et/ou à une bibliothèque de gestes d'application (555) associée à une application particulière, dans lequel un accès à la bibliothèque de gestes de navigation (555) est effectué lorsque le dispositif (100) n'exécute pas une application avec une bibliothèque de gestes d'application associée (555), et lorsque le dispositif (100) exécute l'application particulière associée à la bibliothèque de gestes d'application (555), un accès est effectué à la bibliothèque de gestes d'application (555) et à la bibliothèque de gestes de navigation (555) lorsque la bibliothèque de gestes de navigation (555) complète la bibliothèque de gestes d'application (555), et un accès est effectué uniquement à la bibliothèque de gestes d'application (555) si la bibliothèque de gestes de navigation (555) ne complète pas la bibliothèque de gestes d'application (555), et dans lequel chacune de la bibliothèque de gestes d'application (555) et de la bibliothèque de gestes de navigation (555) est configurée pour stocker deux gestes ou plus et deux signaux correspondants (560) ou plus ; et
délivrer (1160), à l'aide du processeur (530), le signal déterminé (560) ;
dans lequel le processeur (530) ne déclenche la détection du geste que si le mouvement de l'objet (240) provoque une variation minimale de l'intensité lumineuse (115), dans lequel la variation minimale de l'intensité lumineuse (115) indique un début du geste et est déterminée sur la base d'au moins deux mesures d'intensité lumineuse (115) d'un ou plusieurs des capteurs de lumière ambiante (110) ; et
dans lequel trois capteurs de lumière ambiante (110x, 110y, 110z) des trois capteurs de lumière ambiante (110) ou plus sont disposés aux emplacements de surface respectifs du dispositif (100) selon un motif triangulaire de façon qu'un capteur de lumière ambiante (110x) des trois capteurs de lumière ambiante (110x, 110y, 110z) soit décalé par rapport aux deux autres capteurs de lumière ambiante (110y, 110z) .

6. Procédé (1100) selon la revendication 5, dans lequel la délivrance (1160) du signal déterminé (560) consiste à délivrer le second signal (560) lorsqu'un accès est effectué à la bibliothèque de gestes d'application (555) et à la bibliothèque de gestes de navigation (555), et lorsque le geste détecté comporte un premier signal correspondant (560) dans la bibliothèque de gestes de navigation (555) et un second signal correspondant (560) dans la bibliothèque de gestes d'application (555).
